(19) Europäisches Patentamt
European Patent Office
Office européen des brevets

(11) Publication number: 0 307 501 B1

# (12) EUROPEAN PATENT SPECIFICATION

(45) Date of publication of patent specification: 15.07.92

(51) Int. Cl.[5]: C07F 9/18, C07F 9/58, C07F 9/547

(21) Application number: 87113647.9

(22) Date of filing: 17.09.87

## (54) Process for preparing phosphorothioates and phosphates and phosphonothioates and phosphonates.

(43) Date of publication of application:
22.03.89 Bulletin 89/12

(45) Publication of the grant of the patent:
15.07.92 Bulletin 92/29

(84) Designated Contracting States:
AT BE DE ES FR GB IT NL SE

(56) References cited:
NL-A- 6 809 749
US-A- 3 907 815

CHEMICAL ABSTRACTS, vol. 101, no. 9, 27th August 1984, page 654, abstract no. 72835c, Columbus, Ohio, US; V.K. KRISHNAKUMAR: "Synthesis of triaryl phosphates catalyzed by polyethylene glycols in a two-phase system: phase transfer catalysis", & SYNTH. COMMUN. 1984, 14(2), 189-96

(73) Proprietor: DOWELANCO
9002 Purdue Road
Indianapolis, Indiana 46268-3030(US)

(72) Inventor: Gatling, Sterling C.
708 Adams Drive
Midland Michigan(US)

(74) Representative: Huber, Bernhard, Dipl.-Chem. et al
Patentanwälte H. Weickmann, Dr. K. Fincke F.A. Weickmann, B. Huber Dr. H. Liska, Dr. J. Prechtel Kopernikusstrasse 9 Postfach 86 08 20
W-8000 München 86(DE)

EP 0 307 501 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention is directed to the preparation of certain phosphorothioates and phosphates and phosphonothioates and phosphonates in high yields and of high purity utilizing a process employing a two-phase system including an aqueous reaction medium and no organic solvent. The compounds prepared in the present invention correspond to the general formulae

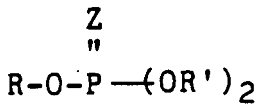

(I),

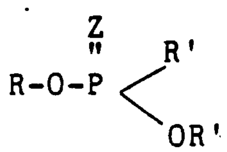

(II),

or

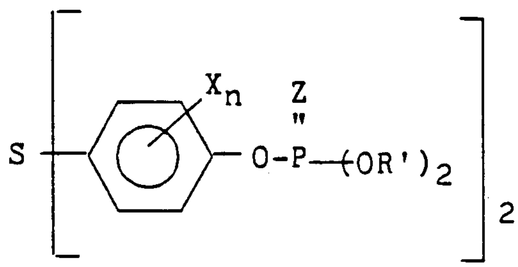

(III)

wherein:

R is 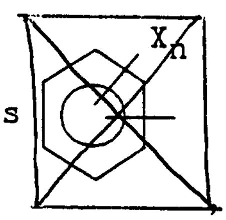 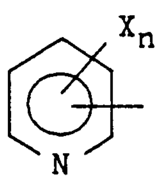 , 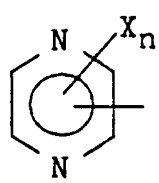 or 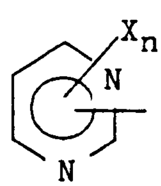 ;

each R' independently represents alkyl of 1 to 6 carbon atoms, phenyl, phenyl mono- or di-substituted by fluoro, chloro, bromo, methyl or ethyl or any combination thereof, pyridyl or pyridyl mono- or di-substituted by fluoro, chloro, bromo, methyl or ethyl or any combination thereof;

$R^2$ and $R^3$ each independently represent hydrogen or alkyl of 1 to 6 carbon atoms;

each X independently represents bromo, chloro, fluoro, iodo, $-NR^2R^3$, cyano, nitro, alkyl of 1 to 6 carbon atoms, alkoxy of 1 to 6 carbon atoms, alkylthio of 1 to 6 carbon atoms or alkylsulfinyl of 1 to 6 carbon atoms;

n is 0, 1, 2 or 3 with the proviso, that when n is more than one, all the ring substituents are mutually sterically compatible; and

Z is oxygen or sulfur.

NL-A-6809749 describes a process for the preparation of O,O-dialkyl-O-arylthiophosphoric acid esters by reaction of O,O-dialkyldiphosphoric acid chloride with a phenol or phenolate in the presence of water and a tertiary amine catalyst.

Subject matter of the present invention is a process for preparing phosphoro- or phosphonothioates or -phosphates of the general formula (I), (II) or (III) according to claim 1.

Preferred embodiments of this process are subject matter of claims 2 to 10.

An advantage of the present invention is the elimination of the use of an organic solvent medium in the production of the above-indicated products while nonetheless achieving high yields and high purity with low levels of the by-product tetraethyl dithiopyrophosphate, also known as sulfotepp.

The term "alkyl of 1 to 6 carbon atoms" is employed herein to designate straight chain alkyls of 1 to 6 carbon atoms, branched chain alkyls of 3 to 6 carbon atoms and cyclic alkyls of 3 to 6 carbon atoms such as, for example, methyl, ethyl, propyl, butyl, isopropyl, isobutyl, secondary butyl, tertiary butyl, cyclopropyl, cyclobutyl, amyl and cyclo.

The terms "alkoxy of 1 to 6 carbon atoms," "alkylthio of 1 to 6 carbon atoms," "alkylsulfinyl of 1 to 6 carbon atoms" and "alkylsulfonyl of 1 to 6 carbon atoms" are employed herein to designate alkoxy and alkylthio groups of the formula

-Y-alkyl

wherein Y is oxygen, sulfur, sulfinyl or sulfonyl and alkyl is defined as hereinabove set forth for "alkyl of 1 to 6 carbon atoms."

The term "mutually sterically compatible" is employed herein to designate X substituent groups which are not affected by steric hindrance as defined in "The Condensed Chemical Dictionary", 7th Edition, Reinhold Publishing Co., N.Y., page 893 (1966) which definition is as follows:

"steric hindrance. A characteristic of molecular structure in which the molecules have a spatial arrangement of their atoms such that a given reaction with another molecule is prevented or retarded in rate."

Steric hindrance is evidenced by compounds having substituent atoms or groups of atoms whose physical bulk in a given spatial arrangement of the atoms in the compound does not permit confinement within volumes required for the exercise of their normal behavior. See "Organic Chemistry", D. J. Cram and G. Hammond, 2nd Edition, McGraw-Hill Book Co., N.Y., page 215 (1964).

In the process of the present invention, the compounds of Formulae I, II and III are prepared by reacting under alkaline conditions at a pH of from 10 to 12, and in the presence of a catalytic amount of a tertiary amine, substantially equimolar amounts of a compound (a) corresponding to one of the formulae

$R\text{-}O^{\ominus}M^{\oplus}$ (IV)

or

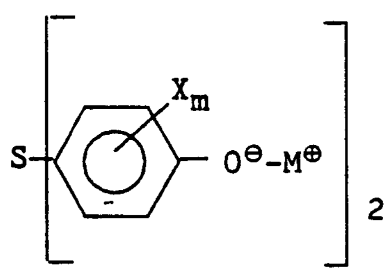

(V)

with a phosphorochloridate or phosphorochloridothioate compound (b) or one of the formulae

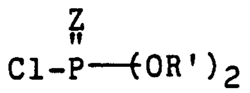 (VI)

or

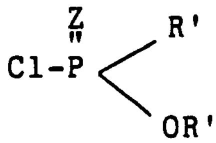 (VII)

in a two-phase system, one phase being primarily the reactant compound (b) of formula VI or VII and a complex thereof with said tertiary amine catalyst and the other phase being an aqueous reaction medium comprising water, a buffer mixture capable of maintaining a pH in the aqueous reaction medium in the range of 10 to 12 during the course of the reaction, and a nonionic surfactant having an HLB Value of from 1 to 20, the aqueous reaction medium containing the other reactant compound (a), viz., the compound of formula IV or V. A surfactant with an HLB Value in the range of 5-15 is preferred, while a surfactant with an HLB Value of about 10 is most preferred. In the above formulae, R, R', X and Z are as hereinbefore defined and M represents alkali metal cation or alkaline-earth metal cation when taken together with a superscribed ⊕ symbol. In order to ensure a complete reaction, it is desirable to use an excess of the Formula IV or V reactant.

In carrying out the reaction process of the invention, the reactant (a) selected and the phosphorochloridate or phosphorochloridothioate reactant are mixed and contacted together in any convenient fashion, and the resulting mixture maintained for a period of time at a temperature in the range of from 0° to 100°C, preferably 45 to 70°C, to complete the reaction.

The term "alkali metal" is employed herein to represent sodium, potassium, rubidium, lithium and cesium. The term "alkaline earth metal" is employed herein to represent calcium, strontium, barium, radium, and magnesium.

The tertiary amines are used in the instant process in small catalytic amounts. For example, amounts of from 0.05 to 5 mole percent, based on the moles of alkali metal, or alkaline earth metal reactant (a) employed, are suitable, but amounts of from 0.1 to 1.0 mole percent are generally preferred. Examples of suitable tertiary amines include aliphatic trihydrocarbyl amines (e.g. trimethylamine, ethyldimethylamine, butyldimethylamine, and N,N,N',N'-tetramethylethylenediamine; aliphatic heterocyclic amines (e.g. 1-azabicyclo[2.2.2]octane, 1-methyl-2-imidazoline, and 1-methylpyrrolidine; mixed aliphatic/aromatic amines (e.g. 4-(N,N-dimethylamino)pyridine, 4-(N-pyrrolidino)pyridine, and phenyldimethylamine; and other similar organic, sterically unhindered, nucleophilic, tertiary amines.

Representative nonionic surfactants having an hydrophilic lipophilic balance value (HLB) in the range of from 1 to 20 include, for example, Polyglycol 26-2 surfactant which is a reaction product of 1 mole of di-secondary butylphenol, 5 moles of ethylene oxide and 4 moles of propylene oxide, Polyglycol 59-13 surfactant which is a condensation product of 8 moles of ethylene oxide and 1 mole of tridecylalcohol, ATLOX® 3434 which is a nonionic/anionic material and ATMOS® 300 which is a nonionic liquid prepared from mono and diglycerides of fat forming fatty acids. Other known surfactants meeting this criteria and which are useful in carrying out the present invention are taught in McCutcheon's Detergents and Emulsifiers, North American Edition, 1983 Annual. The listed surfactants include condensation products of alkylene oxides with organic acids, polyoxyethylene derivatives of sorbitan esters and complex ether alcohols. The surfactant is employed in amounts of from 0.01 to 5.0 weight percent, preferably 0.1 to 5 weight percent, based on the weight of the reactants. It is generally more preferred to use the surfactant in amounts of from 0.5 to 2.0 weight percent.

The alkaline conditions under which this reaction is carried out can be easily achieved by conducting the process in the presence of caustic (NaOH) or caustic potash (KOH) or other conventional base but pH control is best and easiest achieved by the use of an appropriate buffer system such as NaOH-$H_3BO_3$ or KOH-$H_3BO_3$. The specific base employed is, in general, not critical and the main limitation on the base used is that it not unfavorably react with the reactants to prevent the desired reaction from taking place.

However, because of the greater solubility of potassium trichloropyridinate in the reactive aqueous phase replacement of at least part of the NaOH with KOH is usually found to be advantageous. Experience has shown that replacing as little as 5 mole percent of the NaOH with KOH is beneficial.

Vigorous agitation (e.g., by stirring) of the reaction mixture is important, especially since this process is conducted in a two-phase liquid reaction medium, and in the absence of an organic solvent such as a hydrocarbon or a halohydrocarbon. It is an important aspect of the present invention that it provides a method of making the desired phosphates, thiophosphates and phosphonates and thiophosphonates in the substantial or preferably complete absence of any organic solvent medium, eliminating not only expense of using such solvent but the need to recover the solvent from the product thus eliminating this source of contamination of the workplace and the environment.

The following examples further illustrate the present invention.

Example I Preparation of chlorpyrifos, i.e., O,O-diethyl O-(3,5,6-trichloro-2-pyridyl)phosphorothioate

Into a 700 milliliter (ml) baffled reactor equipped with heating means, a mechanical stirrer made up of two sets of four blade turbines, a condenser, a dropping funnel, a thermometer and a pH probe, were placed 99.5 grams (g) (0.417 moles) of sodium 3,5,6-trichloro-2-pyridinate monohydrate, 400 ml of water 0.06 g (0.0005 mole) of 4-dimethylaminopyridine, 3.6 g (0.058 mole) of ortho boric acid, 24.1 g of NaCl, 3.5 g (0.0875 mole) NaOH and 0.5 g of polyglycol PG 26-2 surfactant. PG 26-2 surfactant is the product of reaction of di-sec-butyl phenol reacted with 5 moles of ethylene oxide and 4 moles of propylene oxide and has an HLB Value in the range of 8 to 10.

The reaction mixture was heated to a temperature of 45 ° C while stirring at 1,000 rpm and 75.0 g (0.398 mole) of O,O-diethylphosphorochloridothioate was added during the course of 5 to 10 seconds. The reaction mixture was maintained at 45 ° C and the vigorous stirring continued for 2 hours, during which time the pH dropped from an initial value of 12.3 to 10.15.

The chlorpyrifos product was recovered by filtering off unreacted sodium 3,5,6-trichloro-2-pyridinate and separating the organic and aqueous layers while the reaction mixture was still at about 45 ° C. The organic, or product, layer was immediately washed once with 60 ml of water and dried by vacuum stripping. The product was found to consist of 133.7 g containing 98.5 percent chlorpyrifos in which the impurity sulfotepp was present only to the extent of 0.14 percent. The overall yield based on the amount of O,O-diethylphosphorochloridothioate used was calculated to be 94.4 percent.

Example II

On carrying out a preparative procedure in substantially the same manner as in Example I, except that a 5 mole percent portion of the NaOH actually employed was replaced by KOH, substantially the same excellent yield, purity and low level of sulfotepp was obtained in a slightly shorter reaction time.

On repeating substantially the reaction procedures of either Example I or Example II using any of the phosphorochloridates, phosphorochloridothioates, phosphonochloridates or phosphonochloridothioates, hereinabove defined, in place of O,O-diethylphosphorochloridothioate, to react with any of the reactants (a) hereinabove defined, in place of sodium 3,5,6-trichloro-2-pyridinate, using a catalytic amount of a different tertiary amine, and a different nonionic surfactant having an HLB Value of from 5 to 15 and a buffer mixture capable of maintaining the pH of the aqueous phase in the range of 10 to 12 during the reaction period, substantially similar results are obtained as to product yield, purity and minimum formation of unwanted side reaction products. Similar results are also obtained on repeating any of the foregoing using any nonionic surfactant having an HLB Value in the range of 1 to 20.

**Claims**

**1.** A process for preparing a compound corresponding to one of the formulae:

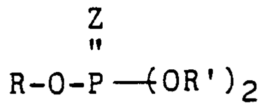,

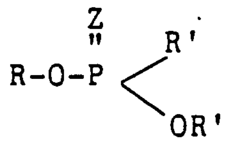,

or

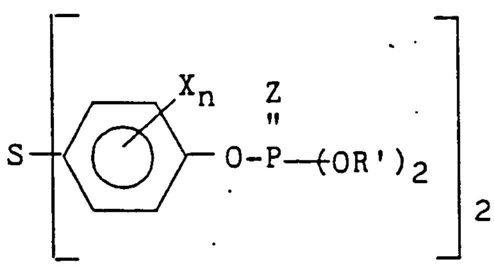

wherein:

R is 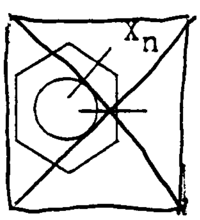 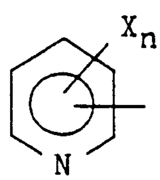, 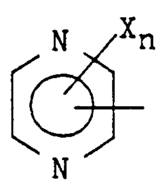 or 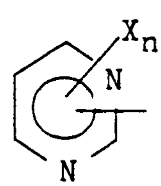;

each R' independently represents alkyl of 1 to 6 carbon atoms, phenyl, phenyl mono- or di-substituted by fluoro, chloro, bromo, methyl or ethyl or any combination thereof, pyridyl or pyridyl mono- or di-substituted by fluoro, chloro, bromo, methyl or ethyl or any combination thereof;

$R^2$ and $R^3$ each independently represent hydrogen or alkyl of 1 to 6 carbon atoms;

each X independently represents chloro, bromo, fluoro, iodo, $-NR^2R^3$, cyano, nitro, alkyl of 1 to 6 carbon atoms, alkoxy of 1 to 6 carbon atoms, alkylthio of 1 to 6 carbon atoms, alkylsulfinyl of 1 to 6 carbon atoms;

n is 0, 1, 2 or 3 with the proviso that when n is greater than one, all the ring substituents are selected from those which are mutually sterically compatible; and

Z is oxygen or sulfur;

which comprises:

reacting under alkaline conditions substantially equimolar amounts of a compound (a) corresponding to one of the formulae:

$R-O^{\ominus}M^{\oplus}$

or

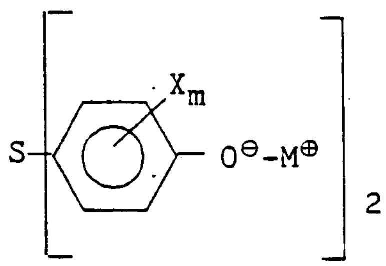

;

with a compound (b) corresponding to one of the formulae

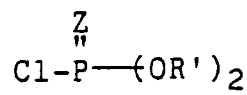

or

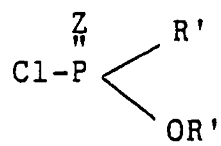

wherein R, R', $R^2$, $R^3$, X and Z are as defined and M represents an alkali metal or alkaline earth metal;

in the presence of a catalytic amount of a tertiary amine; the reaction being carried out in a two-phase system, one phase being primarily the reactant compound (b) of one of the said formulae:

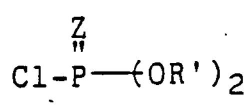

or

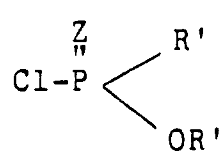

and a complex of such reactant compound with the tertiary amine catalyst and the other phase being an aqueous reaction medium comprising water, a buffer mixture capable of maintaining a pH in the aqueous reaction medium in the range of 10 to 12 during the course of the reaction, a nonionic surfactant having an HLB Value of from 1 to 20; and the compound (a) of one of the formulae:

$R-O^{\ominus}M^{\oplus}$

or

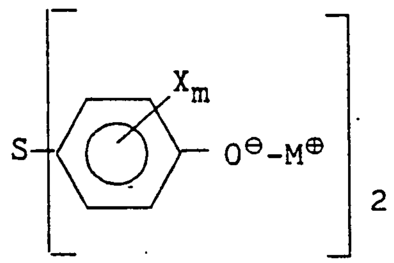

;

the reaction being carried out substantially in the absence of a hydrocarbon or halohydrocarbon solvent.

**2.** The process of Claim 1 wherein the aqueous reaction medium additionally contains sodium chloride.

**3.** The process of Claim 1 or 2 wherein the compound prepared is a compound of the formula:

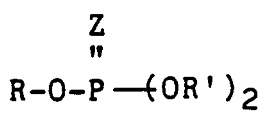

**4.** The process of Claim 3 wherein R is

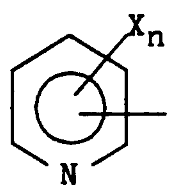

and R′ is alkyl of 1 to 6 carbon atoms.

**5.** The process of Claim 4 wherein R is 3,5,6-trichloro-2-pyridyl and R′ is methyl or ethyl.

**6.** The process of any one of Claims 1 to 5 wherein the nonionic surfactant employed in the aqueous reaction medium has an HLB Value of 5 to 15.

**7.** The process of any one of Claims 1 to 6 wherein the buffer mixture comprises NaOH and/or KOH and boric acid.

**8.** The process of any one of Claims 1 to 7 wherein the compound (a) is sodium O-3,5,6-trichloro-2-pyridinate and the compound (b) is O,O-diethylphosphorodichloridothioate and the process is carried out at a reaction temperature of from 0 °C to 100 °C while the reaction mixture is undergoing substantial agitation.

**9.** The process of Claim 8 wherein the nonionic surfactant has an HLB Value of about 10 and is present in an amount of from 0.05 to 2 weight percent based on the weight of the total reaction mixture.

**10.** The process of Claim 8, wherein the reaction mixture has formed an aqueous layer and an organic layer, plus the additional steps of removing from the reaction mixture by filtration any unreacted compound (a) of the formula: $R\text{-}O^{\ominus}\text{-}M^{\oplus}$; separating the aqueous and organic layers; and, retaining and washing the organic layer with water.

## Revendications

**1.** Procédé de préparation d'un composé correspondant à l'une des formules :

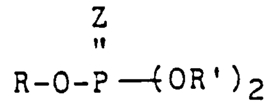

,

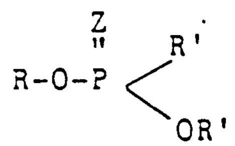

,

ou

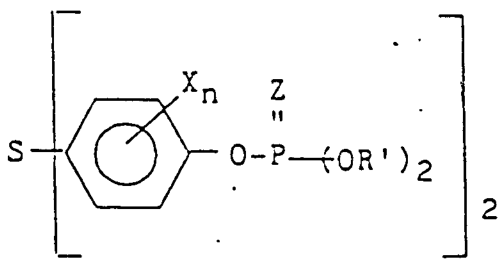

dans lesquelles :

R est 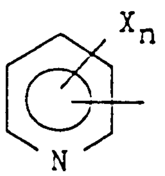 , 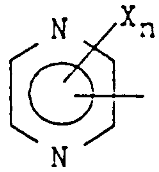 ou 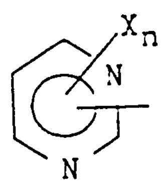 ;

chaque R' représente indépendamment un groupe alkyle de 1 à 6 atomes de carbone, phényle, phényle mono- ou di-substitué par un groupe fluoro, chloro, bromo, méthyle ou éthyle ou une combinaison quelconque de ceux-ci, pyridyle ou pyridyle mono- ou di-substitué par un groupe fluoro, chloro, bromo, méthyle ou éthyle ou une combinaison quelconque de ceux-ci;

$R^2$ et $R^3$ représentent chacun, indépendamment, un atome d'hydrogène ou un groupe alkyle de 1 à 6 atomes de carbone;

chaque X représente indépendamment un groupe chloro, bromo, fluoro, iodo, $-NR^2R^3$, cyano, nitro, alkyle de 1 à 6 atomes de carbone, alcoxy de 1 à 6 atomes de carbone, alkylthio de 1 à 6 atomes de carbone, alkylsulfinyle de 1 à 6 atomes de carbone;

n vaut 0, 1, 2 ou 3, à condition que, lorsque n est supérieur à 1, tous les substituants du cycle soient choisis parmi ceux qui sont mutuellement compatibles d'un point de vue stérique; et

Z est un atome d'oxygène ou de soufre; qui comprend :

la réaction, dans des conditions alcalines, de quantités sensiblement équimolaires d'un composé (a) correspondant à l'une des formules :

$R\text{-}O^{\ominus}M^{\oplus}$

ou

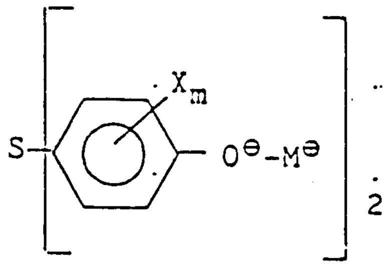 ;

avec un composé (b) correspondant à l'une des formules

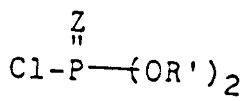

ou

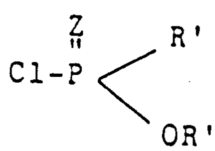

dans lesquelles R, R', $R^2$, $R^3$, X et Z sont tels que définis et M représente un métal alcalin ou un métal alcalino-terreux;

en présence d'une quantité catalytique d'une amine tertiaire; la réaction étant réalisée dans un système à deux phases, une des phases étant constituée principalement du composé réactif (b) répondant à l'une desdites formules :

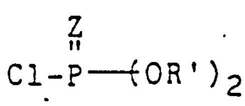

ou

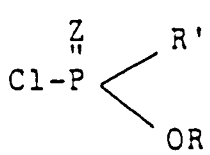

et d'un complexe de ce composé réactif avec le catalyseur amine tertiaire, et l'autre phase étant constituée d'un milieu réactionnel aqueux comprenant de l'eau, un mélange tampon capable de maintenir le pH du milieu réactionnel aqueux dans la gamme de 10 à 12 au cours de la réaction, un tensioactif non ionique ayant un rapport hydrolipophile de 1 à 20; et du composé (a) répondant à l'une des formules :

$R\text{-}O^{\ominus}M^{\oplus}$

ou

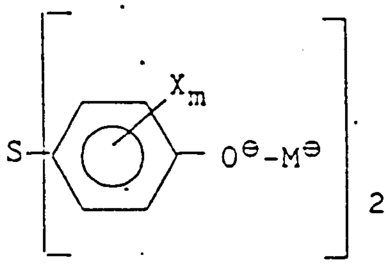 ;

la réaction étant réalisée sensiblement en l'absence de solvant de type hydrocarbure ou hydrocarbure halogéné.

2. Procédé selon la revendication 1, dans lequel le milieu réactionnel aqueux contient, en outre, du chlorure de sodium.

3. Procédé selon la revendication 1 ou 2, dans lequel le composé préparé est un composé de formule :

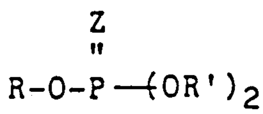

4. Procédé selon la revendication 3, dans lequel R est

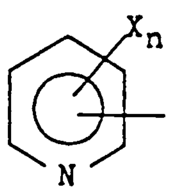

et R' est un groupe alkyle de 1 à 6 atomes de carbone.

5. Procédé selon la revendication 4, dans lequel R est un groupe 3,5,6-trichloro-2-pyridyle et R' est un groupe méthyle ou éthyle.

6. Procédé selon l'une quelconque des revendications 1 à 5, dans lequel le tensioactif non ionique employé dans le milieu réactionnel aqueux a un rapport hydrolipophile de 5 à 15.

7. Procédé selon l'une quelconque des revendications 1 à 6, dans lequel le mélange tampon comprend NaOH et/ou KOH et de l'acide borique.

8. Procédé selon l'une quelconque des revendications 1 à 7, dans lequel le composé (a) est 1'O-3,5,6-trichloro-2-pyridinate de sodium et le composé (b) est le phosphorodichlorodithioate d'O,O-diéthyle, et le procédé est réalisé à une température réactionnelle de 0 ° C à 100 ° C, pendant que le mélange réactionnel est soumis à une agitation substantielle.

9. Procédé selon la revendication 8, dans lequel le tensioactif non ionique a un rapport hydrolipophile d'environ 10 et est présent en une quantité de 0,05 à 2% en poids, par rapport au poids du mélange réactionnel total.

10. Procédé selon la revendication 8, dans lequel le mélange réactionnel a formé une phase aqueuse et une phase organique, et qui comprend en outre les étapes supplémentaires qui consistent à éliminer du mélange réactionnel, par filtration, tout composé (a) de formule $R\text{-}O^{\ominus}M^{\oplus}$ n'ayant pas réagi; à séparer

les phases aqueuse et organique; et à récupérer la phase organique et à la laver avec de l'eau.

## Patentansprüche

1. Verfahren zum Herstellen einer Verbindung, entsprechend einer der Formeln

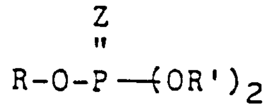,

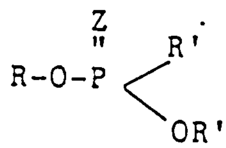

oder

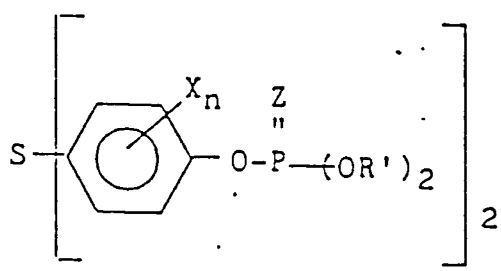

worin:

R 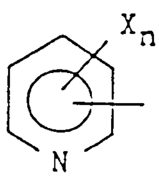, 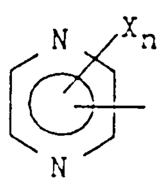 oder 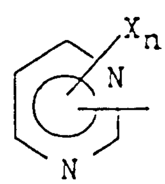 ist,

jedes R' unabhängig Alkyl von 1 bis 6 Kohlenstoffatomen, Phenyl, durch Fluor, Chlor, Brom, Methyl oder Ethyl oder eine beliebige Kombination davon mono- oder disubstituiertes Phenyl, Pyridyl oder durch Fluor, Chlor, Brom, Methyl oder Ethyl oder eine beliebige Kombination davon mono- oder disubstituiertes Pyridyl darstellt,

$R^2$ und $R^3$ jeweils unabhängig Wasserstoff oder Alkyl von 1 bis 6 Kohlenstoffatomen darstellen,

jedes X unabhängig Brom, Chlor, Fluor, Iod, $-NR^2R^3$, Cyano, Nitro, Alkyl von 1 bis 6 Kohlenstoffatomen, Alkoxy von 1 bis 6 Kohlenstoffatomen, Alkylthio von 1 bis 6 Kohlenstoffatomen oder Alkylsulfinyl von 1 bis 6 Kohlenstoffatomen darstellt,

n 0, 1, 2 oder 3 ist, vorausgesetzt, daß wenn n größer 1 ist, alle Ringsubstituenten aus solchen ausgewählt sind, die miteinander sterisch kompatibel sind, und

Z Sauerstoff oder Schwefel ist, umfassend:

die Reaktion unter alkalischen Bedingungen von im wesentlichen äquimolaren Mengen einer Verbindung (a), entsprechend einer der Formeln

$R\text{-}O^{\ominus}M^{\oplus}$

oder

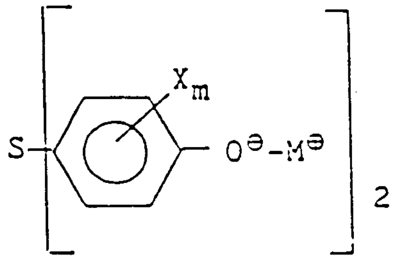

mit einer Verbindung (b), entsprechend einer der Formeln

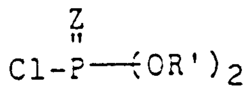

oder

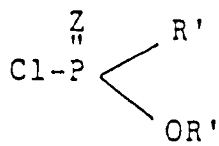

worin R, R', $R^2$, $R^3$, X und Z gemäß Definition sind und M ein Alkalimetall oder Erdalkalimetall darstellt, in Gegenwart einer katalytischen Menge eines tertiären Amins, wobei die Reaktion in einem Zweiphasensystem durchgeführt wird, und eine Phase in erster Linie die Reaktandenverbindung (b) einer der obigen Formeln:

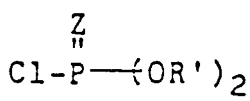

oder

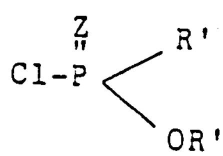

und ein Komplex einer solchen Reaktandenverbindung mit dem tertiären Aminkatalysator ist und die andere Phase ein wäßriges Reaktionsmedium ist, das Wasser, ein Puffergemisch, das einen pH im Bereich von 10 bis 12 während des Reaktionsverlaufs aufrechterhalten kann, ein nichtionisches oberflächenaktives Mittel mit einem HLB-Wert von 1 bis 20 und die Verbindung (a) einer der Formeln umfaßt:

$R\text{-}O^{\ominus}M^{\oplus}$

oder

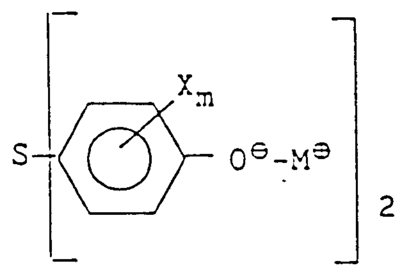

wobei die Reaktion im wesentlichen in Abwesenheit eines Kohlenwasserstoff- oder Halogenkohlenwasserstoff-Lösungsmittels durchgeführt wird.

2. Verfahren nach Anspruch 1, worin das wäßrige Reaktionsmedium weiterhin Natriumchlorid enthält.

3. Verfahren nach Anspruch 1 oder 2, worin die hergestellte Verbindung eine Verbindung der Formel:

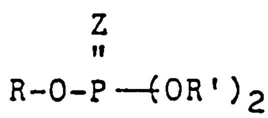

ist.

4. Verfahren nach Anspruch 3, worin R

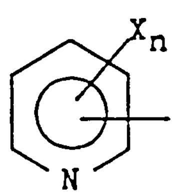

ist und R' Alkyl von 1 bis 6 Kohlenstoffatomen ist.

5. Verfahren nach Anspruch 4, worin R 3,5,6-Trichlor-2-pyridyl und R' Methyl oder Ethyl ist.

6. Verfahren nach einem der Ansprüche 1 bis 5, worin das im wäßrigen Reaktionsmedium verwendete nichtionische oberflächenaktive Mittel einen HLB-Wert von 5 bis 15 hat.

7. Verfahren nach einem der Ansprüche 1 bis 6, worin das Puffergemisch NaOH und/oder KOH und Borsäure umfaßt.

8. Verfahren nach einem der Ansprüche 1 bis 7, worin die Verbindung (a) Natrium-O-3,5,6-trichlor-2-pyridinat ist und die Verbindung (b) O,O-Diethylphosphordichloridothioat ist und das Verfahren bei einer Reaktionstemperatur von 0° bis 100°C durchgeführt wird, während das Reaktionsgemisch einem starken Rühren unterzogen wird.

9. Verfahren nach Anspruch 8, worin das nichtionische oberflächenaktive Mittel einen HLB-Wert von etwa 10 hat und in einem Anteil von 0,05 bis 2 Gewichtsprozent auf Basis des Gewichts des gesamten Reaktionsgemisches vorhanden ist.

10. Verfahren nach Anspruch 8, worin das Reaktionsgemisch eine wäßrige Schicht und eine organische Schicht ausgebildet hat, mit den zusätzlichen Schritten des Entfernens der nicht umgesetzten Verbindung (a) der Formel: $R\text{-}O^{\ominus}\text{-}M^{\oplus}$ durch Filtration aus dem Reaktionsgemisch, des Trennens der wäßrigen

und organischen Schichten und des Zurückbehaltens und Waschens der organischen Schicht mit Wasser.